# EUROPEAN PATENT APPLICATION

(11) **EP 4 645 556 A1**
(43) Date of publication of application: **05.11.2025**
(21) Application number: 23911448.1
(22) Date of filing: 20.11.2023
(51) Int. Cl.: H01M 50/284, H01M 50/213, H01M 50/291

(54) **BATTERY PACK AND METHOD FOR MANUFACTURING SAME**

(30) Priority: 26.12.2022 JP 2022208967
(71) Applicant: Panasonic Energy Co., Ltd., Osaka 570-8511 (JP)
(72) Inventor: MATSUBARA, Shota, Kadoma-shi, Osaka 571-0057 (JP); KATAOKA, Yuma, Kadoma-shi, Osaka 571-0057 (JP)
(74) Representative: Eisenführ Speiser
(86) International application number: PCT/JP2023/041688
(87) International publication number: WO 2024/142666

(57) **Abstract**

The present disclosure provides a battery pack and the like that allow electronic components to be more easily secured to the circuit board. A battery pack 100 includes one or more secondary battery cells 1, a battery holder 20 that holds the one or more secondary battery cells 1, a circuit board 40 electrically connected to the secondary battery cell 1, an outer case 10 that stores the battery holder 20 and the circuit board 40, and an electronic component 50 that is mounted on the circuit board 40, and is visible or operable from outside of the outer case 10. The battery holder 20 includes a battery storage unit 21 that stores the one or more secondary battery cells 1, an attachment unit 24 that enables attachment of at least one edge of the circuit board 40, and a linking unit 26 that links the electronic component 50 with the outer case 10 in a state where the circuit board 40 is attached to the attachment unit 24.

## Description

### TECHNICAL FIELD

The present disclosure relates to a battery pack and a method for manufacturing the same.

### BACKGROUND ART

A battery pack containing a plurality of secondary battery cells stored in an outer case has been used to drive an electrical device by a rechargeable secondary battery, such as a lithium-ion secondary battery (e.g., Patent Literature 1). Such a battery pack includes a battery holder that stores the secondary battery cells and a circuit board on which a charging/discharging circuit for the secondary battery cells, LEDs that indicate the status of the secondary battery cells, switches for user operation, and the like are mounted. The circuit board is placed, for example, on the upper face of the battery holder. Conventionally, the circuit board has been secured to the upper face of the battery holder by screwing or the like. Further, other separate members such as a parts holder for mounting LEDs, switches, etc., and a LED holder containing a LED board have also been provided on the upper face of the circuit board.

However, in configurations having such separate members as parts holders or LED holders, it is necessary to attach the parts holders and the like to the battery holder. In addition, lead wires are required to provide wiring on the circuit board, and there have been challenges in routing lead wires.

### CITATION LIST

### PATENT LITERATURE

Patent Literature 1: Japanese Unexamined Patent Application Publication No. 2013-140686

### SUMMARY OF INVENTION

### TECHNICAL PROBLEM

One objective of the present disclosure is to provide a battery pack that allows electronic components to be more easily secured to the circuit board, and a method for manufacturing the battery pack.

### SOLUTION TO PROBLEM

A battery pack according to one embodiment of the present disclosure includes one or more secondary battery cells, a battery holder that holds the one or more secondary battery cells, a circuit board electrically connected to the secondary battery cell, an outer case that stores the battery holder and the circuit board, and an electronic component that is mounted on the circuit board, and is visible or operable from outside of the outer case. The battery holder includes a battery storage unit that stores the one or more secondary battery cells, an attachment unit that enables attachment of at least one edge of the circuit board, and a linking unit that links the electronic component with the outer case in a state where the circuit board is attached to the attachment unit.

Further, a method for manufacturing a battery pack according to another embodiment of the present disclosure is a method for manufacturing a battery pack including one or more secondary battery cells, a battery holder that holds the one or more secondary battery cells, a circuit board electrically connected to the secondary battery cell, an outer case that stores the battery holder and the circuit board, and an electronic component that is mounted on the circuit board, and is visible or operable from outside of the outer case. The method includes a step of pressing at least one edge of the circuit board toward an attachment unit of the battery holder on an upper face of a battery storage unit that stores the one or more secondary battery cells of the battery holder, and a step of holding the at least one edge of the circuit board with the attachment unit and linking the electronic component with the outer case by a linking unit of the battery holder in a state where the circuit board is attached to the battery holder.

### ADVANTAGEOUS EFFECTS OF INVENTION

The battery pack according to one embodiment of the present disclosure allows the electronic components, such as LED, to be provided on the circuit board without separately providing parts holders for holding the electronic components, thereby reducing the number of components and assembly steps for, for example, connecting the parts holders. As a result, it is possible to achieve reduction in cost and number of assembly processes. Further, by positioning the electronic components provided on the circuit board using the outer case and the attachment unit, these electronic components can be linked with external components.

### BRIEF DESCRIPTION OF DRAWINGS

FIG. 1 is a perspective view of a battery pack according to Embodiment 1;
FIG. 2 is an exploded perspective view of the outer case of FIG. 1;
FIG. 3 is a perspective view of the battery holder of FIG. 2;
FIG. 4 is a plan view of the battery holder of FIG. 3;
FIG. 5 is a cross-sectional view of the battery holder of FIG. 4 taken along the line V-V;
FIG. 6 is an exploded perspective view with the circuit board removed from the battery holder of FIG. 3;
FIG. 7 is an exploded perspective view of the battery holder of FIG. 6;
FIG. 8 is a cross-sectional perspective view of the battery pack of FIG. 2 taken along the line VIII-VIII;
FIG. 9 is a perspective view of a parts holder of a battery pack according to a comparative example;
FIG. 10 is a perspective view of an LED holder of a battery pack according to a comparative example; and
FIG. 11 is a perspective view of an outer case of a battery pack according to a comparative example.

### DESCRIPTION OF EMBODIMENTS

The embodiments of the present disclosure may be specified by the following configurations and features.

A battery pack according to another embodiment of the present disclosure is as recited in the preceding embodiment, wherein the attachment unit is formed into an eave shape projecting to an upper face of the battery storage unit, and the attachment unit having the eave shape is configured to cover from an edge to a part of an upper face of the circuit board in a state where the circuit board is placed on the upper face of the battery storage unit. With this configuration, the circuit board can be held with its edge caught under the eave-shaped attachment unit.

Further, a battery pack according to another embodiment of the present disclosure is as recited in any preceding embodiments, wherein the linking unit is formed as a part of the attachment unit. With this configuration, it is possible to reduce the number of components of the battery pack.

A battery pack according to still another embodiment of the present disclosure is as recited in any preceding embodiments, wherein the attachment unit is formed integrally with the battery storage unit. With this configuration, it is possible to reduce the number of components of the battery pack.

A battery pack according to still another embodiment of the present disclosure is as recited in any preceding embodiments, wherein the electronic component is a plurality of LEDs, the linking unit is a plurality of holder opening windows that are individually opened so that the plurality of LEDs are individually exposed from the battery holder in a state where the circuit board is attached to the attachment unit, and the outer case includes case opening windows that are opened in positions corresponding to the plurality of holder opening windows. With this configuration, the same improvement in separation visibility can be achieved by providing the holder opening window on the battery holder side, without separately preparing an LED holder for improving the LED separation visibility.

A battery pack according to still another embodiment of the present disclosure is as recited in any preceding embodiments, wherein the electronic component is a switch, the linking unit includes a holder operation unit that is disposed at a position corresponding to the switch and is operable in coordination with the switch in a state where the circuit board is attached to the attachment unit, and the outer case includes a case operation unit that is disposed at a position corresponding to the holder operation unit, and is operable in coordination with the holder operation unit. This configuration makes it possible to operate the switch from outside of the outer case with the switch positioned with respect to the outer case.

A battery pack according to still another embodiment of the present disclosure is as recited in any preceding embodiments, wherein the battery holder includes guide walls that respectively guide both side faces of the circuit board intersecting one edge of the circuit board on the upper face of the battery storage unit, and an edge opposite to the one edge of the circuit board is exposed in a state where the circuit board is attached to the upper face of the battery storage unit by the attachment unit. This configuration allows the circuit board to be attached to the battery holder by inserting the circuit board along the guide walls toward the attachment unit.

A method for manufacturing a battery pack according to still another embodiment of the present disclosure is as recited in any preceding embodiments, wherein the step of linking the electronic component with the outer case by the linking unit of the battery holder is a step of linking the plurality of LEDs serving as the electronic component with the case opening windows through a plurality of holder opening windows that serve as the linking unit and are individually opened so that the plurality of LEDs are individually exposed from the battery holder in a state where the circuit board is attached to the attachment unit, the case opening windows being opened on the outer case corresponding to the plurality of holder opening windows. With this configuration, the same improvement in separation visibility can be achieved by providing the opening window on the battery holder side, without separately preparing an LED holder for improving the LED separation visibility.

A method for manufacturing a battery pack according to still another embodiment of the present disclosure is as recited in any preceding embodiments, wherein the step of linking the electronic component with the outer case by the linking unit of the battery holder is a step of linking the switch serving as the electronic component, through a holder operation unit that serves as the linking unit and is operable in coordination with the switch at a position corresponding to the switch in a state where the circuit board is attached to the attachment unit, with a case operation unit that is provided in the outer case and is operable in coordination with the holder operation unit at a position corresponding to the holder operation unit. This configuration makes it possible to operate the switch from outside of the outer case with the switch positioned with respect to the outer case.

Embodiments of the present disclosure are described below with reference to the drawings. However, the embodiments shown below are only examples to illustrate the technical concepts of the present disclosure, and the present disclosure is not limited to these embodiments. Further, this specification does not limit any member in the claims to the members described in these embodiments. In particular, unless otherwise specified, the dimensions, materials, shapes, relative positions, etc. of the components described in these embodiments are intended to be illustrative and not to limit the scope of the present disclosure. It should be noted that the sizes, positional relationships, etc. of the members shown in the drawings may be exaggerated for clarity in the description. Furthermore, in the following description, the same names and reference numbers indicate the same or similar members, and detailed descriptions are omitted as appropriate.
Furthermore, each element constituting the present disclosure may be implemented such that a plurality of elements are formed from the same member, allowing a single member to serve as a plurality of elements, or that, conversely, the function of a single member is shared among a plurality of members.

The battery pack of the present disclosure can be used, for example, as a power source for driving an assist bicycle, a power source for an electric scooter for home delivery and the like, an electric cart for use in locations such as golf courses, factories, and airports, and a self-propelled robot for home delivery, as well as a power source for driving construction machinery or vehicles such as hybrid vehicles and electric vehicles. In addition, the battery pack of the present disclosure can be used as a power source for portable electrical devices, such as radios, electric cleaners, and power tools. Alternatively, for stationary energy storage applications, battery pack of the present disclosure can also be used as a backup power source for servers, as well as a power supply for households, business establishments, and factories. A battery pack used as a power source for driving an assist bicycle is described below as one embodiment of the present disclosure.

### [EMBODIMENT 1]

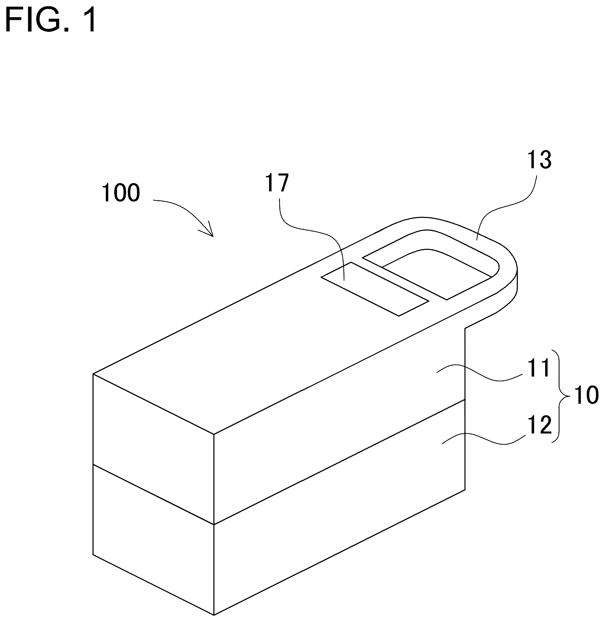

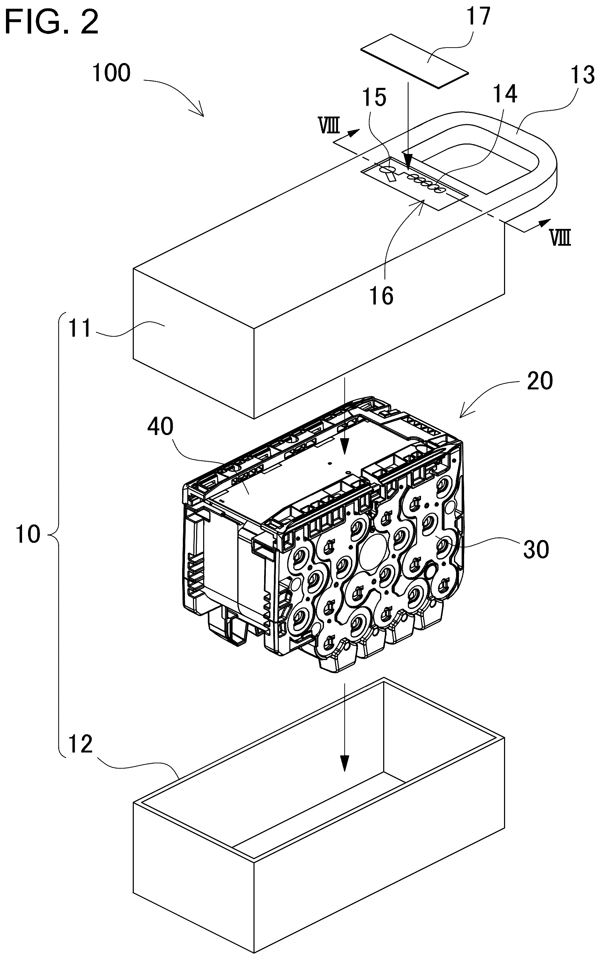

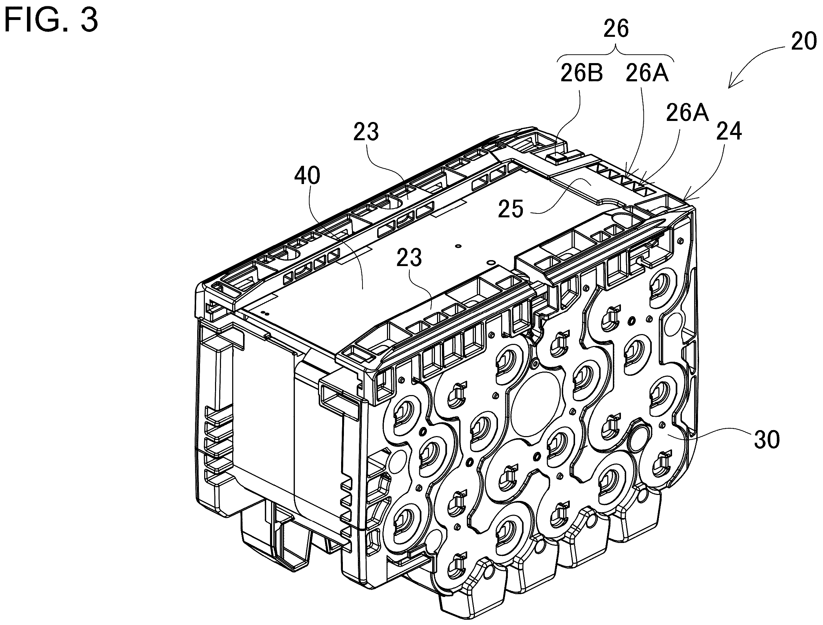

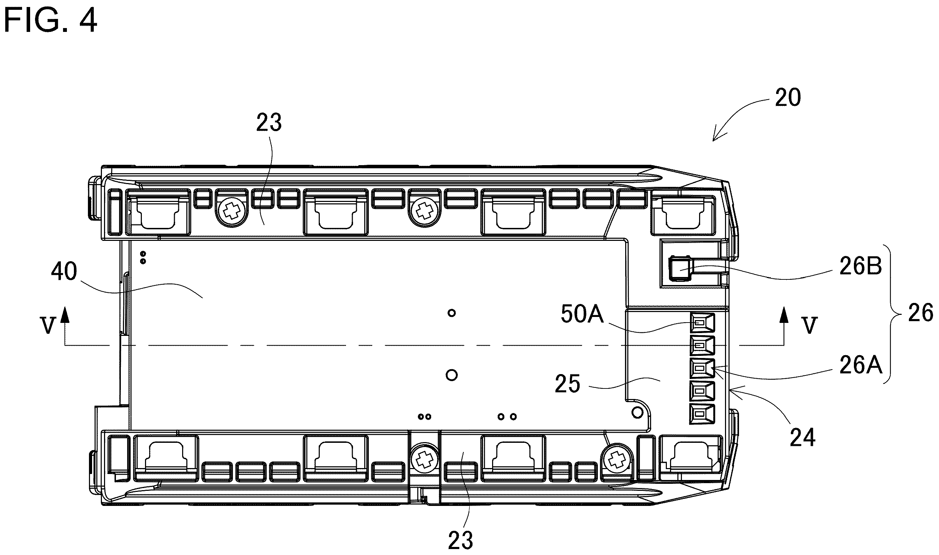

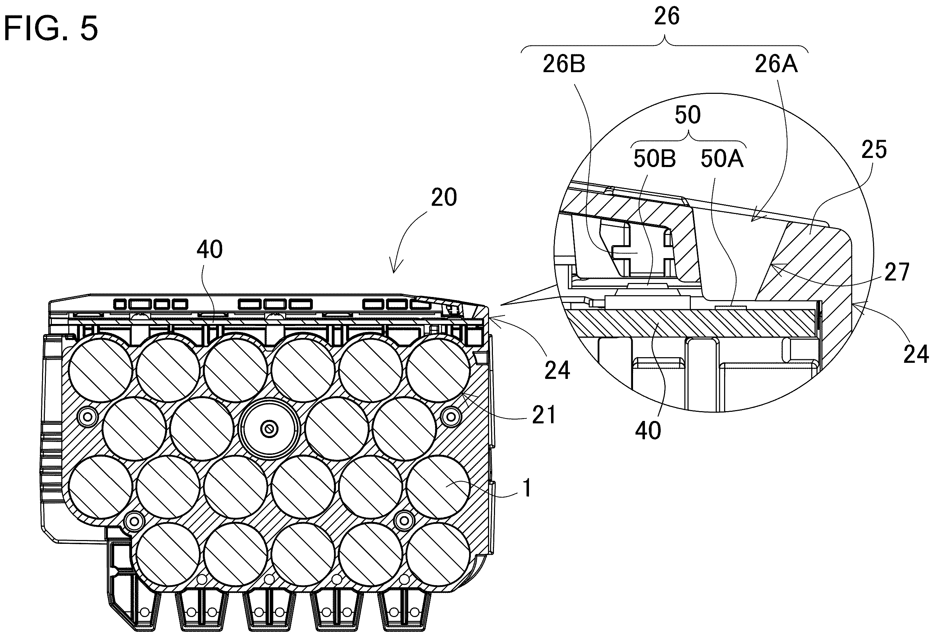

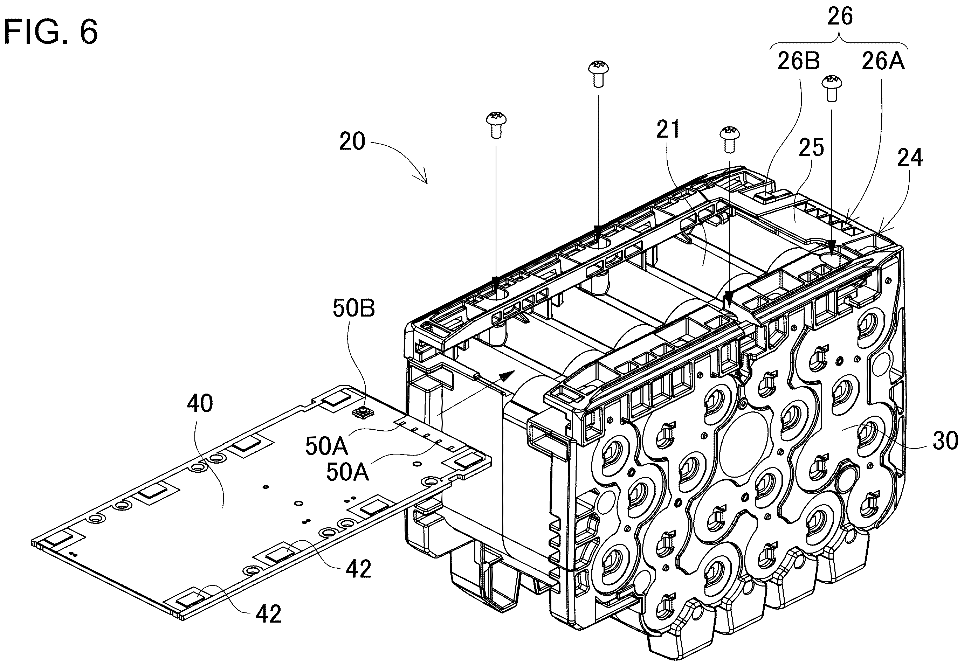

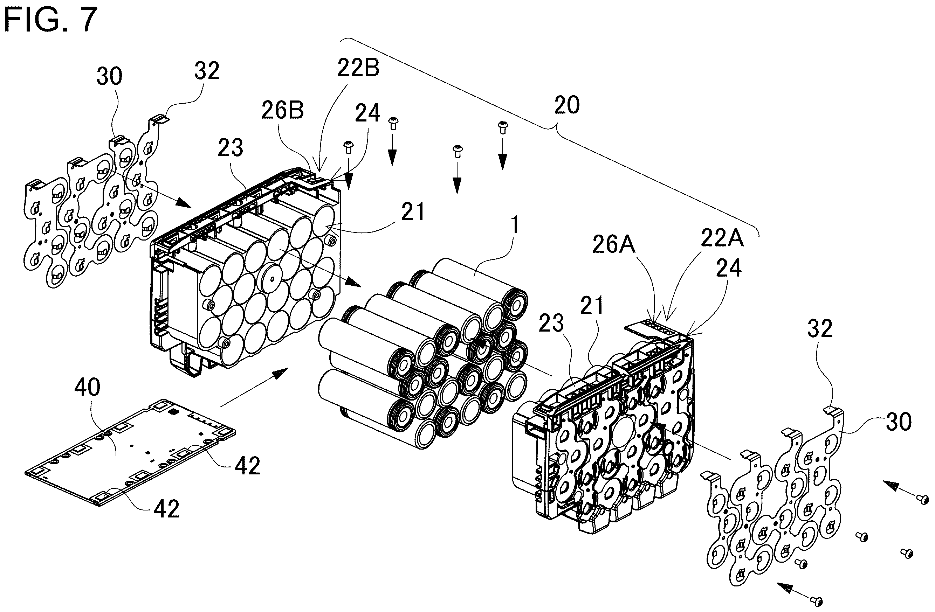

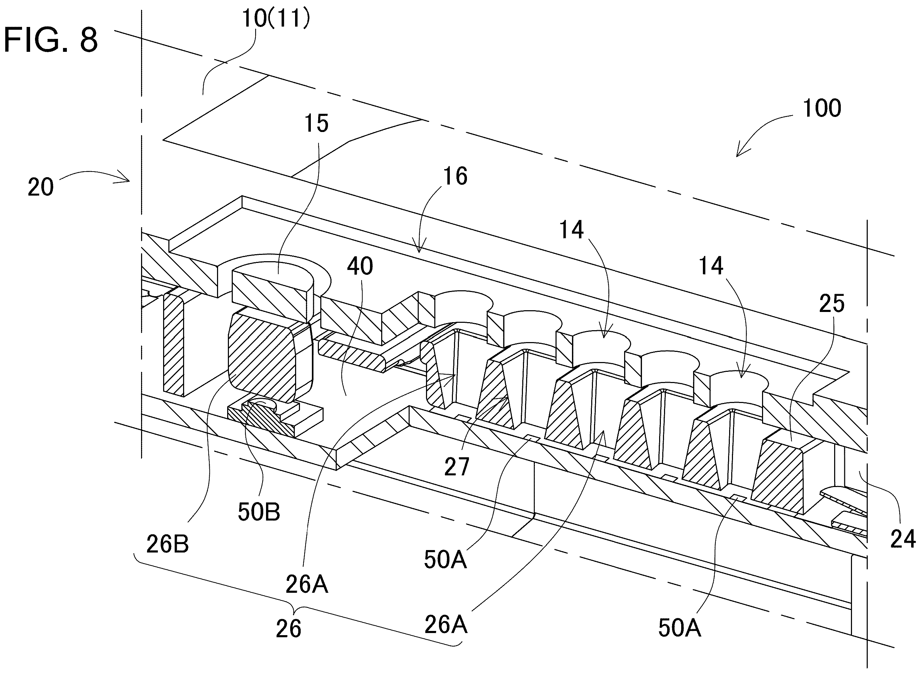

A battery pack 100 according to Embodiment 1 of the present disclosure is shown in FIGs. 1 to 8. In these figures, FIG. 1 is a perspective view of a battery pack 100 according to Embodiment 1; FIG. 2 is an exploded perspective view of an outer case 10 of FIG. 1; FIG. 3 is a perspective view of a battery holder 20 of FIG. 2; FIG. 4 is a plan view of the battery holder 20 of FIG. 3; FIG. 5 is a cross-sectional view of the battery holder 20 of FIG. 4 taken along the line V-V; FIG. 6 is an exploded perspective view with a circuit board 40 removed from the battery holder 20 of FIG. 3; FIG. 7 is an exploded perspective view of the battery holder 20 of FIG. 6; and FIG. 8 is a cross-sectional perspective view of the battery pack 100 of FIG. 2 taken along the line VIII-VIII. The battery pack 100 shown in these figures includes one or more secondary battery cells 1, the battery holder 20 that holds the one or more secondary battery cells 1, the circuit board 40 attached to the battery holder 20, and the outer case 10 that stores the battery holder 20 and the circuit board 40.

### (Outer Case 10)

As shown in FIGs. 1 and 2, the outer case 10 is a storage box having a hollow storage space inside. The storage space is formed into a shape and size that allows the battery holder 20 with the circuit board 40 to be stored therein. Further, the exterior of the outer case 10 is shaped according to the storage space. In the example shown in FIG. 1, the outer case 10 has a rectangular shape extending in one direction. The outer case 10 is also divided into two parts, i.e., an upper part and a lower part. In this example, the outer case 10 is divided into an upper case 11 and a lower case 12. Further, a handle 13 is disposed on an upper portion of the outer case 10. Such an outer case 10 can be made of a material having excellent insulating properties, for example, a thermoplastic resin, such as m-PPE (modified polyphenylene ether), ABS resin, PC (polycarbonate), PP (polypropylene), or PBT (polybutylene terephthalate), or a thermosetting resin, such as silicone resin, unsaturated phenolic resin, or unsaturated polyester.

Further, as shown in FIG. 2, a plurality of case opening windows 14 are formed on the surface of the outer case 10. As shown in FIG. 8, each case opening window 14 is opened at a position corresponding to each of a plurality of holder opening windows 26A of the battery holder 20, which are described later. Further, a case operation unit 15 is provided on the surface of the outer case 10. The case operation unit 15 is disposed at a position corresponding to a holder operation unit 26B of the battery holder 20, which is described later, while being operable in coordination with the holder operation unit 26B.

The case opening windows 14 and the case operation unit 15 are preferably disposed to be adjacent to each other. In the example shown in FIG. 2, the case opening windows 14 and the case operation unit 15 are disposed so that they are adjacent to each other within an operation region 16 provided on the upper portion of the surface of the outer case 10. Further, a seal 17 is adhered to the operation region 16. The case opening windows 14 are visible from outside through the seal 17. For example, light emitted from an LED disposed in the holder opening window 26A can be visually confirmed from outside through the seal 17. The case operation unit 15 is also operable through the seal 17. For example, a switch 50B disposed on the back side of the case operation unit 15 can be operated by pressing the case operation unit 15 through the seal 17.

In such a configuration in which the seal 17 is adhered to the operation region 16, a notch or cut may be provided in the seal 17. For example, a notch may be formed in the seal 17 to expose the case opening windows 14 or the case operation unit 15 from the seal 17. Also, a cut may be made along the outline corresponding to the case operation unit 15 to allow the seal 17 to more easily follow the movement of the case operation unit 15, such as when it is pressed or released. Alternatively, although the plurality of holder opening windows 26A are provided in the battery holder 20 and the plurality of case opening windows 14 are correspondingly provided in the outer case 10 in the example of FIG. 2, it is also possible to form a single, larger case opening window 14 to expose the plurality of holder opening windows 26A together while opening a plurality of seal opening windows corresponding to the holder opening windows 26A in the seal 17.

### (Battery Holder 20)

The battery holder 20, which is stored in the outer case 10, holds one or more secondary battery cells 1. Further, as shown in FIGs. 3 to 6, the battery holder 20 includes the circuit board 40 attached to one face thereof. As shown in FIGs. 3, 4 and the like, the battery holder 20 has an approximately rectangular outer shape, and the circuit board 40 is attached to its upper face. A slot for inserting the circuit board 40 is formed on the upper face of the outer case 10. As shown in FIG. 6, the circuit board 40 is attached to the battery holder 20 by inserting it into the slot from the horizontal direction. Further, the circuit board 40 inserted into the slot is secured by screwing.

### (Battery Storage Unit 21)

The battery holder 20 includes a battery storage unit 21 that stores the one or more secondary battery cells 1. The battery holder 20 shown in FIG. 7 is divided into two parts along the longitudinal direction (left-right direction in the figure) of the secondary battery cell 1, and the battery storage unit 21, which holds the secondary battery cell 1, is formed between divided cases 22A and 22B. Such a battery holder 20 can be made of a material having excellent insulating properties, for example, a thermoplastic resin, such as m-PPE (modified polyphenylene ether), ABS resin, PC (polycarbonate), PP (polypropylene), or PBT (polybutylene terephthalate), or a thermosetting resin, such as silicone resin, unsaturated phenolic resin, or unsaturated polyester.

Each secondary battery cell 1 has a cylindrical shape, and the secondary battery cells 1 are stacked in a horizontally aligned state. In the direction orthogonal to the longitudinal direction of the secondary battery cells 1 (up-down direction in the figure), adjacent secondary battery cells 1 are disposed in an offset manner so that their circular end faces are not aligned concentrically. Further, lead plates 30 are disposed on both sides of the battery holder 20. Each lead plate 30 is secured to the end faces of the plurality of secondary battery cells 1 and connects the secondary battery cells 1 in series or in parallel. In the examples of FIGs. 5 and 7, twenty-one secondary battery cells 1 are connected in a 7-series, 3-parallel configuration. The number of the secondary battery cells and the number of series or parallel connections can be appropriately changed according to specifications such as the voltage or capacity required for the battery pack. Further, the posture in which the battery holder 20 holds the secondary battery cells 1 is not limited to the example shown in FIG. 7, etc., and may take any form. For example, in the example of FIG. 7, the battery holder 20 holds the plurality of secondary battery cells 1 in a horizontal posture; however, the battery holder 20 may also hold them in a vertical posture. Further, on the side face of the battery holder 20, the positive and negative electrodes of the secondary battery cells 1 are mixed; however, the positive and negative electrodes may also be disposed so that only the positive electrodes or only the negative electrodes are aligned on the same plane.

### (Secondary Battery Cell 1)

Each secondary battery cell 1 has positive and negative electrodes. The positive or negative electrode is preferably disposed on one of the end faces of the secondary battery cell 1. Suitable examples of batteries to be used for the secondary battery cell 1 include known secondary batteries, such as lithium-ion secondary batteries, nickel-metal hydride batteries, or nickel-cadmium batteries.

### (Lead Plate 30)

The lead plate 30 is disposed on a side face of the battery holder 20. The lead plate 30 connects the electrodes on the end faces of the secondary battery cells 1 to each other, thereby connecting the plurality of secondary battery cells 1 in series or in parallel. These lead plates 30 are made of metal plates with excellent conductivity, such as nickel plates, aluminum, or iron materials with a nickel plating, and have connection pieces 32 to be connected to the circuit board 40 at end portions on the side where the circuit board 40 is installed. An insulating plate may be placed on each end face of the lead plate 30, if necessary. The insulating plate is made of a material with excellent insulating property, such as paper or mica.

### (Circuit Board 40)

The circuit board 40 has weld regions 42 for welding the connection pieces 32 of the respective lead plates 30, and is electrically connected to the secondary battery cells 1. The circuit board 40 includes a protection circuit and a charging/discharging circuit for the secondary battery cells 1. Further, the circuit board 40 includes an electronic component 50, such as an LED 50A and a switch 50B. The electronic component 50 mounted on the circuit board 40 is a member that can be visually recognized or can be operated by the user from outside of the outer case 10. For example, the LED 50A can be visually recognized by the user from outside of the outer case 10, and the remaining capacity of the secondary battery cells 1 or the charging/discharging status of the secondary battery cells 1 can be shown by the number of the plurality of LEDs 50A lighted. Further, the switch 50B can be operated by the user from the surface of the outer case 10. The switch 50B is provided, for example, to be pressed by the user to allow the user to instruct the display of the remaining capacity. A hard resin such as a glass epoxy substrate is preferably used for such a circuit board 40.

### (Slide-in Structure)

The circuit board 40 is disposed on the upper face of the battery storage unit 21 of the battery holder 20. Since the connection pieces 32 of the respective lead plates 30 are electrically connected to the circuit board 40, the connection pieces 32 of the lead plates 30 are bent and connected to the weld regions 42 of the circuit board 40. Due to this configuration, the circuit board 40 is not installed from the upper face of the battery storage unit 21 of the battery holder 20, instead, the circuit board 40 is installed from the side of the battery storage unit 21 of the battery holder 20 while avoiding the bent connection pieces 32 of the lead plates 30. The battery holder 20 includes an attachment unit 24 that guides the circuit board 40 to the slot while enabling attachment of at least one edge of the circuit board 40. By inserting the circuit board 40 into the slot in this way to form a slide-in structure in which an edge of the circuit board 40 is pressed against the attachment unit 24, as shown in the cross-sectional view of FIG. 5, the circuit board 40 can be easily positioned relative to the battery holder 20. As a result, the positioning can be more easily performed while directly mounting the electronic components 50 such as the LED 50A and the switch 50B on the circuit board 40.

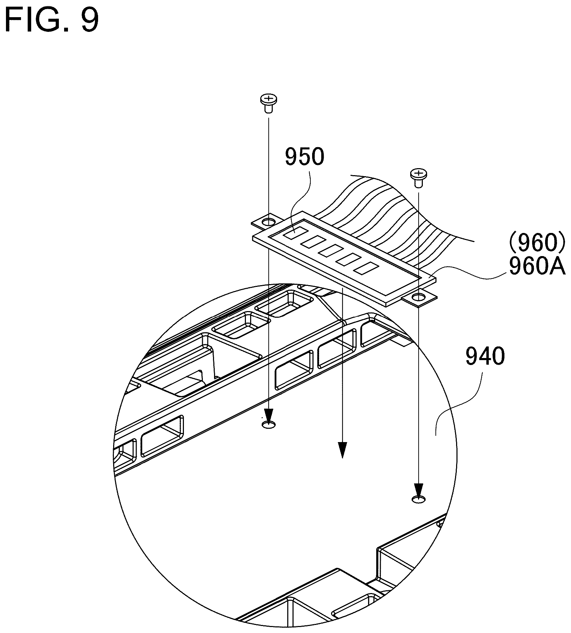

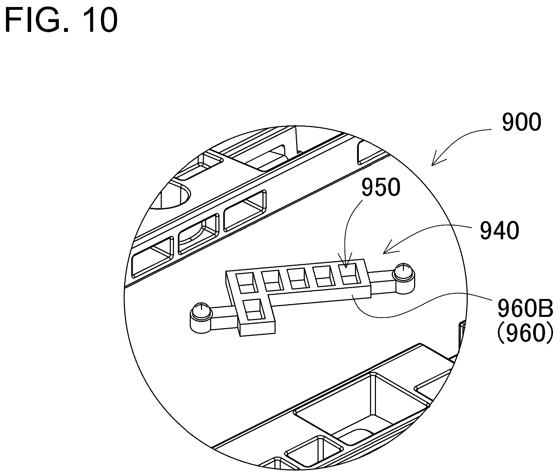

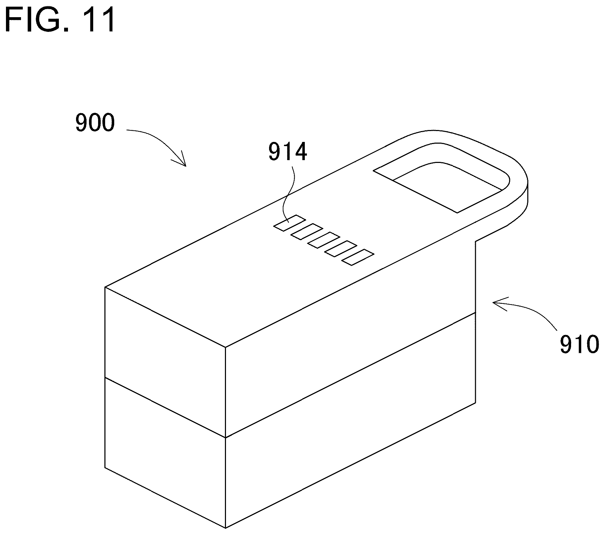

Here, a battery pack 900 according to a comparative example is shown in FIGs. 9, 10, and 11. FIG. 9 shows an example in which an LED holder 960A including LED is mounted on a circuit board 940. FIG. 10 shows an example of a parts holder 960B that stores an electronic component 950 such as LED and switches. A sub-holder 960, such as the LED holder 960A and the parts holder 960B, is mounted on the circuit board 940, and the circuit board 940 is then attached to the battery holder 20 and stored in an outer case 910 as shown in FIG. 11. Here, it is necessary to link the outer case 910 with the electronic components 950 including LED and switches stored in the sub-holders 960 including the LED holder 960A and the parts holder 960B. For example, in order to indicate the remaining capacity of the battery by the number of the plurality of LEDs lighted, it is necessary to allow the user to visually recognize the lighting status of each LED from outside of the outer case 910. Therefore, a case opening window 914 for visually recognizing the LEDs is formed in the outer case 910, and it is necessary for the case opening window 914 and the LED holder 960A to be relatively positioned accurately so that they are disposed in corresponding positions. Similarly, it is also necessary for the switch provided in the parts holder 960B to be at a position corresponding to the position of the case operation unit 15 provided in the outer case 910, so that the user can operate the switch from outside of the outer case 910. The positioning work to include all positions within a predetermined range has been burdensome, not only due to the positioning between the battery holder 20 and the outer case 910, but also due to accumulation of attachment position errors when mounting the LEDs and switches to the sub-holders 960 and when mounting the sub-holders 960 to the circuit board 940. Inaccurate positioning may lead to events such that the LEDs cannot be visually recognized from outside of the outer case 910, or light from a plurality of LEDs leaks through case opening windows other than the intended case opening window 914. This may also result in hindrance of operation of the switch.

On the other hand, it is also necessary to mount the LED holder 960A and the parts holder 960B on the circuit board 940, and positioning work is also required for the mounting. In addition, lead wires are also required to electrically connect the LED holder 960A and the parts holder 960B to the circuit board 940. In particular, in consideration of workability of such as soldering, the lead wires need to be made somewhat longer for more efficient routing. However, this results in problematic obstruction of long lead wires.

In view of these problems, in the battery pack 100 according to Embodiment 1, as shown in FIGs. 5, 7, etc., the electronic components 50 such as the LED 50A and the switch 50B, which are required to be visible or operable from outside of the outer case 10, are directly mounted on the circuit board 40 without using sub-holders such as LED holders or parts holders. In addition, by attaching the circuit board 40 on which such electronic components 50 are mounted to the battery holder 20 using a slide-in structure, all components are already positioned and secured in the fixed positions, and therefore it is sufficient to perform positioning only between the battery holder 20 and the outer case 10, thereby reducing the positioning workload. Furthermore, since sub-holders are not used, the processes of mounting the electronic components 50 on the sub-holders and mounting the sub-holders on the circuit board 40 can be omitted, thereby reducing production costs in addition to saving on the cost of sub-holder components.

### (Guide Wall 23)

The slot for implementing the slide-in structure is formed on the upper face of the battery holder 20 and includes a pair of guide walls 23 that guide both side faces of the circuit board 40 intersecting one edge of the circuit board 40. In the example shown in FIG. 6, the guide walls 23 are bent in an L-shape from the side faces of the battery holder 20 toward the inside thereof, on the upper face of the battery storage unit 21, so as to guide both sides of the circuit board 40. By guiding the edges on both sides of the circuit board 40 with the pair of guide walls 23 in this way, the circuit board 40 can be guided along the slot. Further, with the circuit board 40 attached to the upper face of the battery storage unit 21 by the attachment unit 24, the other edge opposite to this edge of the circuit board 40 is exposed.

### (Attachment Unit 24)

The attachment unit 24 is disposed on the back side of the upper face of the battery holder 20. The attachment unit 24 is attached to at least one edge of the circuit board 40. In the examples of FIGs. 5 and 6, the right edge of the circuit board 40 is pressed into and brought into contact with the attachment unit 24, thereby positioning the circuit board 40 in the longitudinal direction. Further, the positioning of the circuit board 40 in the width direction is made by the pair of guide walls 23, thereby achieving positioning in the XY plane. With the circuit board 40 positioned relative to the battery holder 20, the circuit board 40 is screwed and secured to the battery holder 20, as shown in FIG. 6.

As shown in the cross-sectional view of FIG. 5 with an enlarged view of a main portion, the attachment unit 24 is formed in an eave shape that covers the edge to a part of the upper face of the circuit board 40 in the state where the circuit board 40 is placed on the upper face of the battery storage unit 21. With this configuration, the circuit board 40 can be held with its edge caught under the eave-shaped attachment unit 24. The attachment unit 24 can also be formed integrally with the battery storage unit 21.

### (Linking Unit 26)

Further, the battery holder 20 includes a linking unit 26 that links the electronic components 50 with the outer case 10 in the state where the circuit board 40 is attached to the attachment unit 24. As described above, by accurately positioning the circuit board 40 and the battery holder 20, the electronic components 50 directly mounted on the circuit board 40 can be linked with the outer case 10 without using the sub-holders such as the LED holders or the parts holders for holding the electronic components 50. In other words, whereas, conventionally, it was necessary to mount the sub-holders on the circuit board 40 and then mount the circuit board 40 on the battery holder 20, in the battery pack 100 according to Embodiment 1, the linking between the electronic components 50 and the outer case 10 is achieved solely by mounting the circuit board 40 on the battery holder 20, using the linking unit 26 incorporated in the battery holder 20.

### (Holder Opening Window 26A)

Such a linking unit 26 can be formed as a part of the connection part. For example, when the electronic components 50 are a plurality of LEDs 50A, the linking unit 26 may be provided as a plurality of holder opening windows 26A that are individually opened so that each of the plurality of LED 50A is exposed from the battery holder 20 in the state where the circuit board 40 is attached to the attachment unit 24. As shown in FIG. 5, each holder opening window 26A is opened in a projection 25 that projects in the shape of an eave and constitutes the connection part of the battery holder 20. As shown in FIG. 8, the holder opening windows 26A, whose number corresponding to the number of LEDs 50A, i.e., the electronic components 50, are individually opened in positions corresponding to the LEDs 50A respectively mounted on the circuit board 40. By individually forming the holder opening windows 26A for respective LEDs 50A in this way, the separation visibility among the respective LEDs 50A can be improved. Further, in order to improve the separation visibility, the projection 25 in which each holder opening window 26A is formed may be black or given light-absorbing properties. In addition, the inner face of each opening window is formed as an inclined face 27 to facilitate reflection of the light emitted by each LED 50A and extraction of the light to the outside. Further, the inclined face 27 may be coated with a reflective film that reflects light to improve the efficiency of light extraction.

On the other hand, the outer case 10 that stores the battery holder 20 is provided, as shown in FIG. 8, etc., with case opening windows 14 in positions corresponding to the respective holder opening windows 26A. Accordingly, the user can visually confirm the lighting of the LEDs 50A from outside of the outer case 10.

### (Holder Operation Unit 26B)

The electronic component 50 is not limited to the LED 50A, and other members may also be used. For example, in the example of FIG. 8, the switch 50B is provided in addition to the plurality of LEDs 50A as battery components. In this case, the linking unit 26 serves as the holder operation unit 26B that is disposed in a position corresponding to the switch 50B in the state where the circuit board 40 is attached to the attachment unit 24. The holder operation unit 26B is operable in coordination with the switch 50B. For example, when the switch 50B is a push button, pressing the holder operation unit 26B from the upper face causes its back side to come into contact with the switch 50B to operate the switch 50B. The switch structure in this case uses a cantilever hinge design, but the switch structure is not limited to this, and other structures, such as hinge shapes based on a rigid-frame structure, may also be suitably employed.

Further, the outer case 10 includes the case operation unit 15 at a position corresponding to the holder operation unit 26B. The case operation unit 15 is operable in coordination with the holder operation unit 26B. Accordingly, when the user operates the case operation unit 15 of the outer case 10, the bask side of the case operation unit 15 comes into contact with the holder operation unit 26B, thereby causing the holder operation unit 26B to operate the switch 50B. In this manner, the user can operate the switch 50B from outside of the outer case 10 through the holder operation unit 26B.

In the example of FIG. 7, divided holders 22A and 22B that constitute the battery holder 20 are asymmetrically disposed, with the holder opening window 26A provided on the divided holder 22A and the holder operation unit 26B provided on the divided holder 22B. However, the layout of the linking unit is not limited to this configuration, and any suitable layout may be employed, such as providing both the holder opening window and the holder operation unit on one of the divided holders.

### (Method for Manufacturing Battery Pack)

The method for manufacturing the battery pack described above includes a step of pressing at least one edge of the circuit board 40 toward an attachment unit 24 of the battery holder 20 on an upper face of a battery storage unit 21 that stores the one or more secondary battery cells 1 of the battery holder 20, and a step of holding the at least one edge of the circuit board 40 with the attachment unit 24 and linking the electronic component 50 with the outer case 10 by a linking unit 26 of the battery holder 20 in a state where the circuit board 40 is attached to the battery holder 20. This allows the electronic components 50, such as the LED 50A, to be provided on the circuit board 40 without separately providing parts holders for holding the electronic components 50, such as the LED 50A, thereby reducing the number of components and assembly steps for, for example, connecting the parts holders. As a result, it is possible to achieve reduction in cost and number of assembly processes. Further, by positioning the electronic components 50 provided on the circuit board 40 using the outer case 10 and the attachment unit 24, these electronic components 50 can be linked with external components.

In the above examples, the battery pack is attached to the electrical device to be driven to supply power to the device. Additionally, when the remaining capacity of the battery pack is low or when the battery pack deteriorates over time, the battery pack can be replaced so that the electrical device remains usable. However, the battery pack of the present disclosure is not limited to a replaceable battery pack that typically stores secondary battery cells. The present disclosure is also applicable to embodiments in which secondary battery cells are stored within a casing of an electrical device. In the present disclosure, a battery pack simply refers to those in which, at least, secondary battery cells are stored in a case. Therefore, a configuration with built-in secondary battery cells for driving an electrical device stored in a casing of the electrical device itself is also referred to as a battery pack. In other words, the present disclosure is not limited to replaceable battery packs, and is also applicable to electrical devices with built-in secondary battery cells.

### INDUSTRIAL APPLICABILITY

The battery pack according to the present disclosure can be suitably used for a power source for driving an assist bicycle, or a power source for driving self-propelled robots for home delivery, electric carts for home delivery and golf courses, electric scooters, construction machinery, as well as vehicles such as hybrid vehicles and electric vehicles. In addition, the battery pack according to the present disclosure can also be suitably be used as a power source for portable electrical devices such as radios, electric cleaners, and power tools, as well as stationary energy storage applications such as a backup power source for servers or a power supply for households, business establishments, and factories.

### REFERENCE SIGNS LIST

- 100: battery pack
- 1: secondary battery cell
- 10: outer case
- 11: upper case
- 12: lower case
- 13: handle
- 14: case opening window
- 15: case operation unit
- 16: operation region
- 17: seal
- 20: battery holder
- 21: battery storage unit
- 22A, 22B: divided case
- 23: guide wall
- 24: attachment unit
- 25: projection
- 26: linking unit; 26A ... holder opening window; 26B ... holder operation unit
- 27: inclined face
- 30: lead plate
- 32: connection piece
- 40: circuit board
- 42: weld region
- 50: electronic component; 50A ... LED; 50B ... switch
- 900: battery pack
- 910: outer case
- 914: case opening window
- 940: circuit board
- 950: electronic component
- 960: sub-holder; 960A ... LED holder; 960B ... parts holder

## Claims

1. A battery pack comprising:
one or more secondary battery cells;
a battery holder that holds the one or more secondary battery cells;
a circuit board electrically connected to the secondary battery cell;
an outer case that stores the battery holder and the circuit board; and
an electronic component that is mounted on the circuit board, and is visible or operable from outside of the outer case,
wherein
the battery holder comprises:
a battery storage unit that stores the one or more secondary battery cells;
an attachment unit that enables attachment of at least one edge of the circuit board; and
a linking unit that links the electronic component with the outer case in a state where the circuit board is attached to the attachment unit.

2. The battery pack as recited in claim 1, wherein
the attachment unit is formed into an eave shape projecting to an upper face of the battery storage unit, and
the attachment unit having the eave shape is configured to cover from an edge to a part of an upper face of the circuit board in a state where the circuit board is placed on the upper face of the battery storage unit.

3. The battery pack as recited in claim 2, wherein the linking unit is formed as a part of the attachment unit.

4. The battery pack as recited in claim 3, wherein the attachment unit is formed integrally with the battery storage unit.

5. The battery pack as recited in claim 1, wherein
the electronic component is a plurality of LEDs,
the linking unit is a plurality of holder opening windows that are individually opened so that the plurality of LEDs are individually exposed from the battery holder in a state where the circuit board is attached to the attachment unit, and
the outer case comprises case opening windows that are opened in positions corresponding to the plurality of holder opening windows.

6. The battery pack as recited in claim 1, wherein
the electronic component is a switch,
the linking unit comprises a holder operation unit that is disposed at a position corresponding to the switch and is operable in coordination with the switch in a state where the circuit board is attached to the attachment unit, and
the outer case comprises a case operation unit that is disposed at a position corresponding to the holder operation unit, and is operable in coordination with the holder operation unit.

7. The battery pack as recited in any one of claims 1 to 6, wherein
the battery holder comprises guide walls that respectively guide both side faces of the circuit board intersecting one edge of the circuit board on the upper face of the battery storage unit, and
an edge opposite to the one edge of the circuit board is exposed in a state where the circuit board is attached to the upper face of the battery storage unit by the attachment unit.

8. A method for manufacturing a battery pack, the battery pack comprising:
one or more secondary battery cells;
a battery holder that holds the one or more secondary battery cells;
a circuit board electrically connected to the secondary battery cell;
an outer case that stores the battery holder and the circuit board; and
an electronic component that is mounted on the circuit board, and is visible or operable from outside of the outer case,
the method comprising:
a step of pressing at least one edge of the circuit board toward an attachment unit of the battery holder on an upper face of a battery storage unit that stores the one or more secondary battery cells of the battery holder; and
a step of holding the at least one edge of the circuit board with the attachment unit and linking the electronic component with the outer case by a linking unit of the battery holder in a state where the circuit board is attached to the battery holder.

9. The method for manufacturing a battery pack as recited in claim 8, wherein the step of linking the electronic component with the outer case by the linking unit of the battery holder is a step of
linking the plurality of LEDs serving as the electronic component
with case opening windows through a plurality of holder opening windows that serve as the linking unit and are individually opened so that the plurality of LEDs are individually exposed from the battery holder in a state where the circuit board is attached to the attachment unit, the case opening windows being opened on the outer case corresponding to the plurality of holder opening windows.

10. The method for manufacturing a battery pack as recited in claim 8, wherein the step of linking the electronic component with the outer case by the linking unit of the battery holder is a step of
linking the switch serving as the electronic component,
through a holder operation unit that serves as the linking unit and is operable in coordination with the switch at a position corresponding to the switch in a state where the circuit board is attached to the attachment unit,
with a case operation unit that is provided in the outer case and is operable in coordination with the holder operation unit at a position corresponding to the holder operation unit.
